# EUROPEAN PATENT APPLICATION

(11) **EP 2 151 998 A1**
(43) Date of publication of application: **10.02.2010**
(21) Application number: 09156059.9
(22) Date of filing: 24.03.2009
(51) Int. Cl.: H04N 7/01, H04N 5/14, H04N 5/44

(54) **Image processing apparatus and control method thereof**

(30) Priority: 05.08.2008 KR 20080076345
(71) Applicant: Samsung Electronics Co., Ltd., Suwon-si, Gyeonggi-do 442-742 (KR)
(72) Inventor: Jang, Dae-hyun, Gyeonggi-do, Suwon-si (KR); Kwon, Oh-yun, Seoul (KR); Noh, Young-joong, Gyeonggi-do, Suwon-si (KR)
(74) Representative: Waddington, Richard

(57) **Abstract**

Disclosed is a control method of an image processing apparatus, the control method including: processing one among a first image, a second image formed on the basis of a different frame rate from that of the first image, and an overlay image where the first image is overlapped with the second image, which is inputted, to be displayable; and compensating for a motion of the processed image on the basis of the first image if it is determined that the inputted image is the first image or the overlay image.

## Description

### BACKGROUND OF THE INVENTION

### Field of the Invention

Apparatuses and methods consistent with the present invention relate to an image processing apparatus which processes an inputted image to be displayed, and a control method thereof, and more particularly, to an image processing apparatus which performs a motion compensation depending on properties of an inputted image, and a control method thereof.

### Description of the Related Art

An image processing apparatus includes a set-top box, a digital TV, an analog TV, an IPTV or other apparatus for processing an image inputted from an image supply source to be displayed. An image processing apparatus such as a TV displaying and processing an inputted image is classified into NTSC (national television system committee), PAL (phase alternative line) and SECAM (sequential couleur memoire) according to an image processing rate. The NTSC image processing apparatus processes images at 30 frames per second while the PAL and SECAM image processing apparatuses process images at 25 frames per second.

An image supply source processes an image source into an image at frames corresponding to an image processing apparatus to supply the processed image to the image processing apparatus. It is assumed that the image source is a film source of 24 frames per second and the image processing apparatus employs NTCS. In this case, the film source is processed as an inputted image of 30 frames per second and then supplied to the image processing apparatus.

However, if the image source of 24 frames per second is processed as same as the image of 30 frames per second, variation in motion of the image becomes large between consecutive frames or a part of the image is dragged.

### SUMMARY OF THE INVENTION

Accordingly, aspects of the present invention will be set forth in part in the description which follows and, in part, will be obvious from the description, or may be learned by practice of the present invention.

According to the present invention there is provided an apparatus and method as set forth in the appended claims. Other features of the invention will be apparent from the dependent claims, and the description which follows.

According to an aspect of the invention a control method of an image processing apparatus comprises:
processing an inputted image to be displayable, where the image is one among a first image, a second image formed on the basis of a different frame rate from that of the first image, and an overlay image where the first image is overlapped with the second image; and
compensating for a motion of the processed image on the basis of the first image if it is determined that the inputted image is the first image or the overlay image.

According to an aspect of the invention a control method of an image processing apparatus may include: processing one among a first image, a second image formed on the basis of a different frame rate from that of the first image, and an overlay image where the first image is overlapped with the second image, which is inputted, to be displayable; and compensating for a motion of the processed image on the basis of the first image if it is determined that the inputted image is the first image or the overlay image.

The compensating for the motion may include compensating for the motion if a motion variation of the overlay image processed to be displayed is a preset first setting value or more.

The compensating for the motion may include determining whether the motion variation between a frame of the first image and a frame of the overlay image adjacent to the frame of the first image is the first setting value or more.

The motion variation of the overlay image may be smaller than or equal to a second setting value larger than the first setting value.

The compensating for the motion may include calculating a motion vector variation between two frames adjacent to each other from the processed image to be displayed; and generating and inserting an interpolation frame between the two frames adjacent to each other to have the variation smaller than the preset setting value if the variation is the preset setting value or more.

The first and second images may be outputted by the same image supply source.

The first image may be formed by the image supply source based on a film image.

The second image may include an OSD (on screen display) menu.

According to another aspect of the invention an image processing apparatus may include: an image processor which processes one among a first image, a second image formed on the basis of a different frame from that of the first image, and an overlay image where the first image is overlapped with the second image, which is inputted, to be displayable; and a motion compensator which compensates for a motion of the image processed by the image processor on the basis of the first image if it is determined that the inputted image is the first image or the overlay image.

The motion compensator may compensate for the motion if a motion variation of the overlay image processed by the image processor is a preset first setting value or more.

The motion compensator may determine whether the motion variation between a frame of the first image and a frame of the overlay image adjacent to that of the first image is the first setting value or more.

The motion compensator may compensate for the motion of the overlay image if the motion variation of the overlay image is smaller than or equal to a second setting value larger than the first setting value and is equal to or larger than the first setting value.

The motion compensator may calculate a motion vector variation of two frames adjacent to each other from the image processed by the image processor, and generate and insert an interpolation frame between the two frames adjacent to each other to have the motion vector variation smaller than the preset setting value if the variation is the preset setting value or more.

The first and second images may be inputted by the same image supply source.

The first image may be formed by the image supply source on the basis of a film image.

The second image may include an OSD (on screen display) menu.

The image processor may process the image on the basis of one of NTSC (national television system committee), PAL (phase alternative line) and SECAM (sequential couleur memoire).

Also, an image processing apparatus may include: an image processor which processes one among a first image, a second image formed on the basis of a different frame from that of the first image and an overlay image where the first image is overlapped with the second image, which is inputted, to be displayable; a motion compensator which selectively compensates for a motion of the image processed by the image processor on the basis of the motion of the image; and a controller which controls the motion compensator to compensate for a motion of the image processed by the image processor on the basis of the first image if it is determined that the inputted image is the first image or the overlay image.

### BRIEF DESCRIPTION OF THE DRAWINGS

The above and/or other aspects of the present invention will become apparent and more readily appreciated from the following description of the embodiments, taken in conjunction with the accompanying drawings of which:
FIG. 1 is a control block diagram of an image processing apparatus according to an exemplary embodiment of the present invention;
FIG. 2 illustrates an example of compensating for a motion of an inputted image in the image processing apparatus in FIG. 1;
FIG. 3 illustrates an example of judder occurring when an overlay image is displayed in the image processing apparatus in FIG. 1;
FIG. 4 illustrates an example of a first image overlaid with a second image among consecutive frames in the image processing apparatus in FIG. 1;
FIG. 5 illustrates an example that a first image in changed in a scene among the consecutive frames of the image processing apparatus in FIG. 1;
FIG. 6 is a flowchart to describe a method of processing an inputted image in the image processing apparatus in FIG. 1;
FIG. 7 is a flowchart to describe a method of compensating for a motion in FIG. 6; and
FIG. 8 is a flowchart to describe a method of determining whether a first image is overlaid with a second image in FIG. 7.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

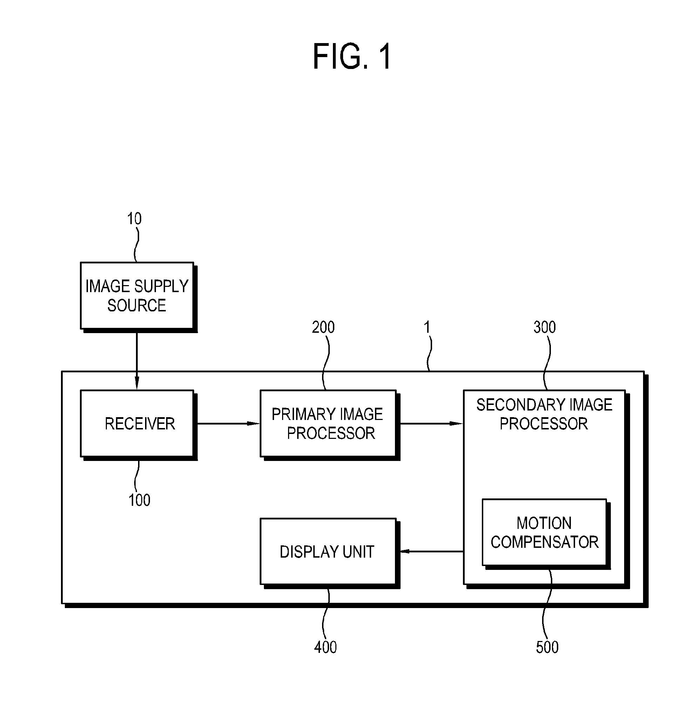

FIG. 1 is a control block diagram of an image processing apparatus 1 which receives an image from an image supply source 10. The image supply source 10 and the image processing apparatus 1 according to the present exemplary embodiment may include a DVD player or a Blu-ray player to generate an image, and a TV, respectively, but not limited thereto.

As shown therein, according to the exemplary embodiment of the present invention, the image supply source 10 generating an image and the image processing apparatus 1 processing the image inputted by the image supply source 10 into a displayable image are provided.

The image processing apparatus 1 includes image processors 200 and 300 to process an image inputted from the image supply source 10 to be displayed. The image processing apparatus 1 includes a motion compensator 500 which compensates for a motion of an image processed by the image processors 200 and 300. The motion compensator 500 may be provided as a separate element from the image processors 200 and 300 or included in the image processors 200 and 300. The method of compensating for a motion of the image will be described later.

Here, the image inputted from the image supply source 10 may include a predetermined first image or a second image different from the first image, or an overlaid image between the first and second images. The motion compensator 500 according to the present exemplary embodiment may compensate for a motion of the inputted image.

The image source supplying the first image according to the present exemplary embodiment has a different frame rate from that of the image processing apparatus 1 even though the first and second images are not limited thereto. For example, in a case that the image processing apparatus 1 processes an image to be displayed with 30 frames per second, the first image is processed by and supplied from the image supply source 10 that processes a source image of 24 frames per second into an image of 30 frames per second. This is only an exemplary embodiment and does not confine the spirit of the present invention.

The second image according to the present exemplary embodiment is formed on the basis of a frame rate different from that of the first image. For example, the second image may include an OSD (on screen display) menu image or a still image generated by the image supply source 10. The second image may be separately supplied by the image supply source 10. However, the second image according to the present exemplary embodiment is supplied in the form of an overlay image as it is overlaid to the first image.

Hereinafter, a detailed configuration of the image processing apparatus 1 will be described.

The image processing apparatus 1 includes a receiver 100 to receive an image from the image supply source 10, image processors 200 and 300 to process an inputted image and a display unit 400 to display a processed image thereon. In the present exemplary embodiment, the image processors 200 and 300 are classified as a primary image processor 200 and a secondary image processor 300, but may be further classified depending on each function. Further, an additional processor (not shown) may be provided to control operations of the foregoing elements.

The motion compensator 500 according to the present exemplary embodiment is included in the secondary image processor 300, but not limited thereto. Alternatively, the motion compensator 500 may be separated from the secondary image processor 300.

The receiver 100 receives an image inputted by the image supply source 10. The receiver 100 may receive various images from various image supply sources 10. For example, the receiver 100 receives a transport stream as a signal from the image supply source 10. Here, the receiver 100 may tune to the received transport stream and demultiplex the tuned transport stream into a video bit stream.

The primary image processor 200 decodes the video bit stream from the receiver 100 into an image to be displayed on the display unit 400. To support the function, the primary image processor 200 may include various decoders such as moving picture experts group (MPEG)-2, video codec (VC)-1, H.264 or the like type.

The secondary image processor 300 processes the decoded image additionally. For example, the secondary image processor 300 de-interlaces an image to be progressive, scales an image at various picture ratios to be displayed on the display unit 400 and enhances picture quality. The secondary image processor 300 may include an integrated single chip-set or include separate elements depending on functions.

As for the NTSC image processing apparatus 1, the secondary image processor 300 processes an inputted image to be displayed with a frame rate of 30 frames per second on the display unit 400. In the PAL or SECAM image processing apparatus 1, the secondary image processor 300 processes an inputted image with a frame rate of 25 frames per second. Hereinafter, the image processing apparatus 1 according to the present exemplary embodiment includes NTSC image processing apparatus.

The display unit 400 displays an image which is processed by the secondary image processor 300. The display unit 400 may include LCD (liquid crystal display), PDP (plasma display panel), OLED (organic light emitting diode), FED (field emission display) or ELD (electro luminescence display), but not limited thereto.

If the first image which is generated on the basis of a source with a frame rate of 24 frames per second is inputted from the image supply source 10 to the image processing apparatus 1 having the foregoing configuration, the inputted image is processed by the primary and secondary image processors 200 and 300 to be displayed on the display unit 400. Here, the image processing apparatus 1 includes an NTSC image processing apparatus which processes an image with a frame rate of 30 frames per second. The image supply source 10 supplies a first image at 30 frames per second corresponding to the image processing apparatus 1.

However, since the first image is obtained by processing a source having 24 frames per second to have 30 frames per second, there is a difference of six frames per second. Thus, when the first image is displayed on the display unit 400, motion difference of the image is significant between consecutive frames of the first image, displaying images with unnatural motion or causing judder in an area where the motion of the image is large. The term judder refers to an image shaken or dragged.

To minimize such a phenomenon, the image processing apparatus 1 includes the motion compensator 500 which compensates for a motion of the image processed by the secondary image processor 300, i.e. compensates for a motion depending on motion estimation.

If it is determined that the source of the first image has a different frame rate from that of an image processed by the image processing apparatus 1, the motion compensator 500 compensates for the motion. A processor (not shown) of the image processing apparatus 1 or the motion compensator 500 may determine whether the frame rate of the first image is different.

The motion compensator 500 calculates a motion vector between consecutive frames of the first image processed by the secondary image processor 300, and generates and inserts an interpolation frame between the two frames if the motion variation between the two frames adjacent to each other is the preset value or more. Thus, the motion variation becomes the preset value and less to thereby display the first image with a natural motion, minimize judder and improve picture quality.

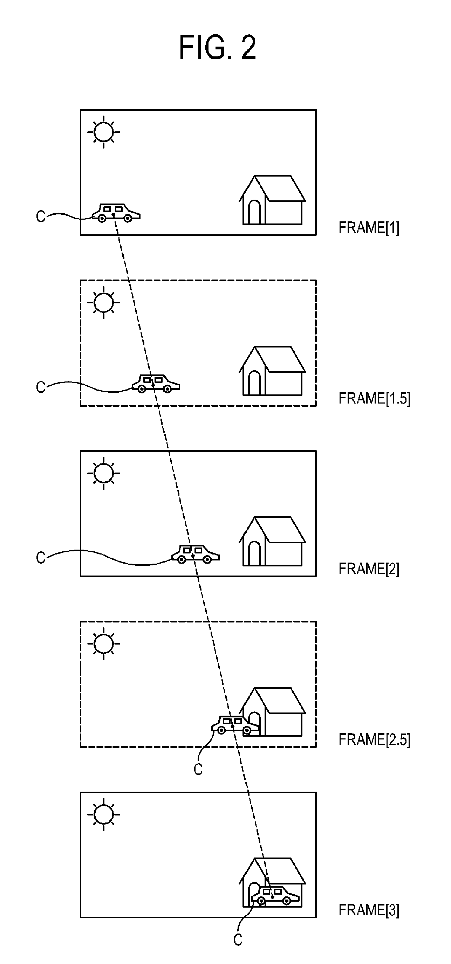

Hereinafter, a method of compensating for the motion by the motion compensator 500 will be described in detail with reference to FIG. 2. FIG. 2 illustrates an example of a motion compensation method according to motion estimation of an image.

FIG. 2 illustrates a part of consecutive frames in the first image. Frames of the first image initially inputted to the image processing apparatus 1 in FIG. 2 include a Frame [1], a Frame [2] and a Frame [3]. It may be seen that the motion variation between the frames of a car image (C) is large.

Here, the motion compensator 500 detects the motion variation between the Frame [1], the Frame [2] and the Frame [3], and reduces the motion variation of the consecutive frames of the image if determining that the motion variation is large. An example of the operation of the motion compensator 500 is as follows.

The motion compensator 500 generates and inserts a Frame [1.5] and a Frame [2.5] between the Frame [1] and the Frame [2] and between the Frame [2] and the Frame [3] to interpolate the frames which are determined to have a large motion variation.

Referring to FIG. 2, the insertion of the Frame [1.5] and the Frame [2.5] reduces the motion variation of the consecutive frames of a car image (C) to provide the car image (C) with a more natural motion.

With the foregoing configuration of the motion compensator 500, even if the first image generated from a source at 24 frames per second is inputted to the image processing apparatus 1 processing the image at 30 frames per second, the image may have natural motion and better quality.

However, while the first image is being processed to be displayed on the display unit 400, an overlay image where the first image is overlaid with the second image is inputted from the image supply source 10 in some cases. Here, the second image is formed on the basis of a different frame rate from that of the first image and may include a still image or an OSD menu generated from the image supply source 10. The second image according to the present exemplary embodiment includes an OSD menu, but not limited thereto and may include other types of video or still image such as another video program.

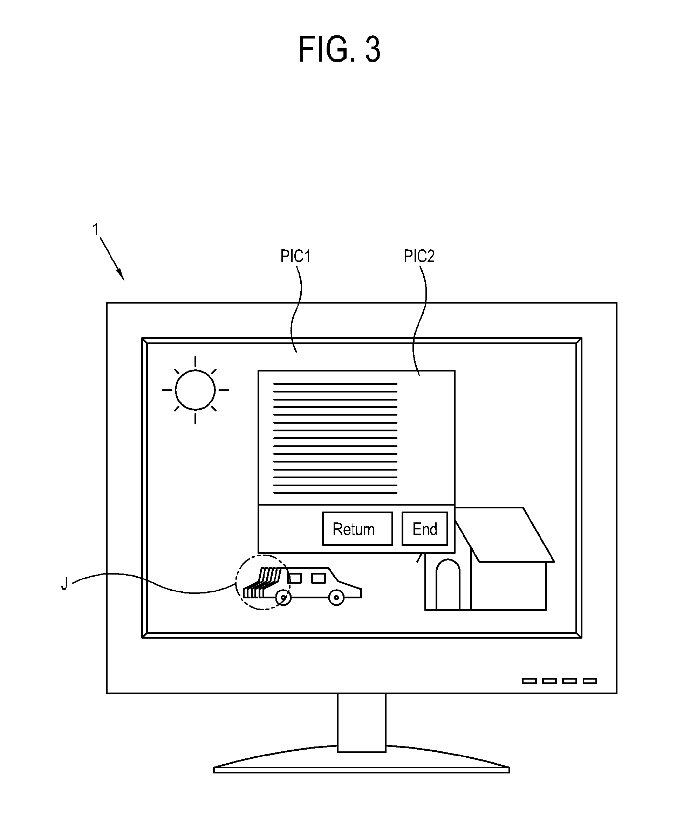

Referring to FIG. 3, the display of the overlay image will be described. FIG. 3 illustrates an example of displaying an overlay image on the image processing apparatus 1.

If the first image is inputted from the image supply source 10, the primary and secondary image processors 200 and 300 process a first image PIC1, and the motion compensator 500 compensates for the motion of the processed first image PIC1. If the first image PIC1 is overlaid with a second image PIC2 during the process, errors occur in the motion compensation of the motion compensator 500 and the motion compensation is not performed to the first image since the first image PIC1 and the second image PIC2 are formed on the basis of different frame rates.

As the motion of the first image PIC1 is not compensated for during the processing and displaying of the second image PIC2, judder J takes place in an area of the first image PIC1 having a large motion variation.

To prevent such a phenomenon, the motion compensator 500 compensates for a motion of the overlay image based on the first image PIC1 if the first image PIC1 is overlaid with the second image PIC2 during the motion compensation for the first image PIC1.

To this end, the motion compensator 500 determines whether an image processed by the image processors 200 and 300 include an overlay image, and detects in real time the motion variation between consecutive frames of the image. If the first image is overlaid with the second image and the motion variation between consecutive frames of the image processed by the image processors 200 and 300 is the preset first setting value or more, the motion compensator 500 determines that the frame of the first image is overlaid with the second image.

Then, the motion compensator 500 compensates for the motion of the frames of the overlay image based on the first image. Accordingly, the judder as shown in FIG. 3 may be prevented.

It may be determined in various standards whether the first image is overlaid with the second image. For example, the overlay may be determined while the primary image processor 200 decodes an image or the receiver 100 processes an inputted image.

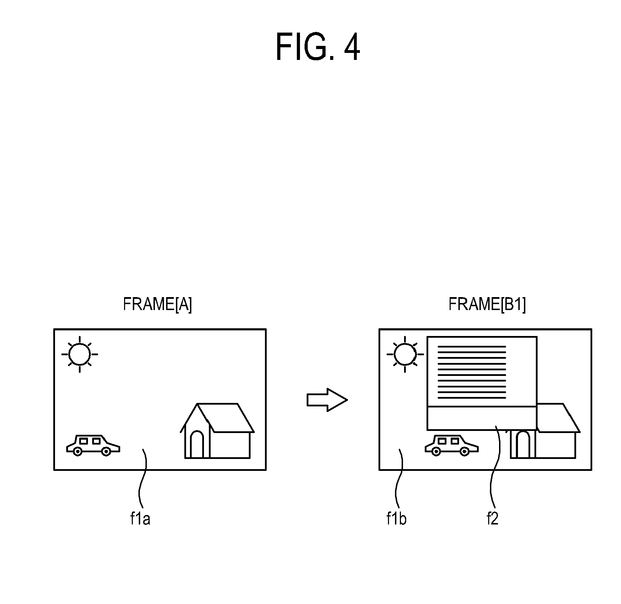

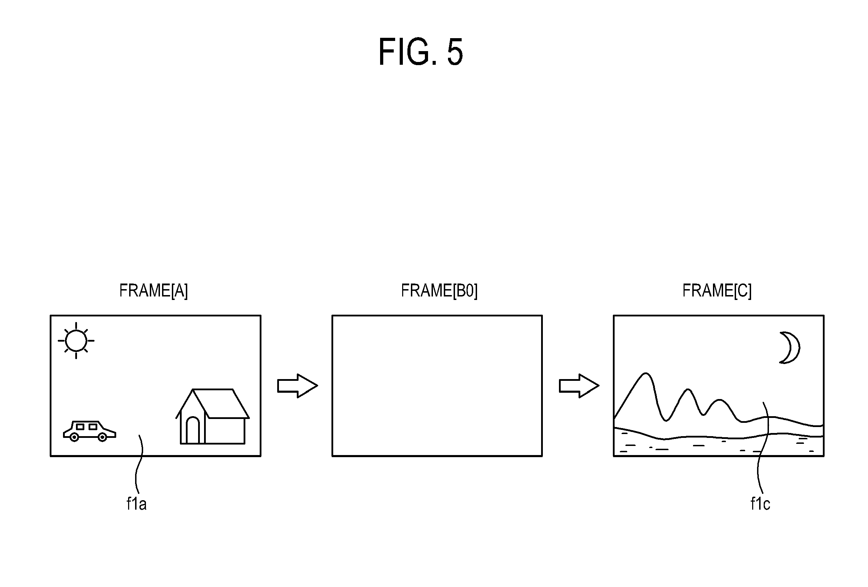

Hereinafter, a method of compensating for the motion of the overlay image will be described in detail with reference to FIGS. 4 and 5.

FIG. 4 illustrates an example that frames of an overlay image are adjacent to frames of the first image according to the present exemplary embodiment.

As shown therein, a Frame [A] includes a frame of a first image f1a, and a Frame [B1] which is adjacent to the Frame [A] indicates that a first image f1 b is overlapped with a second image f2. In this case, a motion vector variation between the Frame [A] and the Frame [B] is larger than a preset first setting value due to the second image f2.

Here, the first setting value may be set during the production of the image processing apparatus 1 in consideration of various factors such as a display size of the second image f2 or a motion vector variation between consecutive frames of the first image, and test data.

If the motion vector variation between the Frames [A] and [B] is larger than the first setting value, the motion compensator 500 determines that the first image f1b is overlapped with the second image f2at a Frame [B1]. Then, the motion compensator 500 compensates for the motion of the first image f1 b to thereby prevent judder of the first image f1 b.

Even if the motion vector variation between consecutive frames is larger than the first setting value, there is a case that a scene of the first image is entirely changed rather than the first image is overlapped with the second image. Such a case will be described with reference to FIG. 5.

FIG. 5 illustrates an example of an entirely changed scene in consecutive frames of the first image according to the present exemplary embodiment.

As shown therein, a Frame [A], a Frame [BO] and a Frame [C] are consecutive frames of a first image f1a and f1c. The Frame [BO] is a blank frame and a scene between the first image f1a of the Frame [A] and the first image f1c of the Frame [C] is entirely changed, leaving the Frame [BO] therebetween.

In this case, the motion vector variation between the Frame [A] and the Frame [BO] and between the Frame [BO] and the Frame [C] is larger than the first setting value and larger than that between the Frame [A] and the Frame [B1] in FIG. 4.

That is, FIGS 4 and 5 illustrate examples of the higher motion vector variation than the first setting value between predetermined two frames adjacent to each other. The motion vector is higher in FIG. 5 than in FIG. 4. Therefore, a predetermined second setting value which is larger than the first setting value is preset, and distinguishes the two cases above. The second setting value may also be changed in various ways.

If the detected motion vector variation is equal to or larger than the first setting value, and smaller than or equal to the second setting value, the motion compensator 500 determines that the first image is overlapped with the second image as in FIG. 4. On the other hand, if the detected motion vector variation is larger than the second setting value, the motion compensator 500 determines that the scene is entirely changed in the consecutive frames of the first image as in FIG. 5.

As described above, the motion compensator 500 determines whether the first image is overlapped with the second image, detects the motion variation between the consecutive frames of the first image processed by the image processors 200 and 300 and determines that the frame includes a frame of the overlay image if the detection value ranges between the first setting value and the second setting value. Then, the motion compensator 500 may compensate for the motion of the overlay image on the basis of the first image.

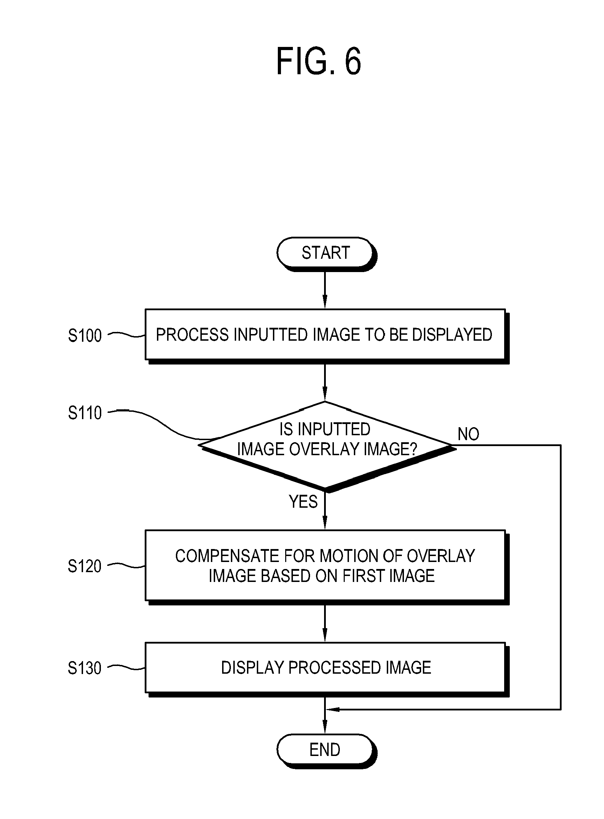

With the foregoing configuration, a control method of the image processing apparatus 1 according to the exemplary embodiment of the present invention will be described with reference to FIGS. 6 to 8.

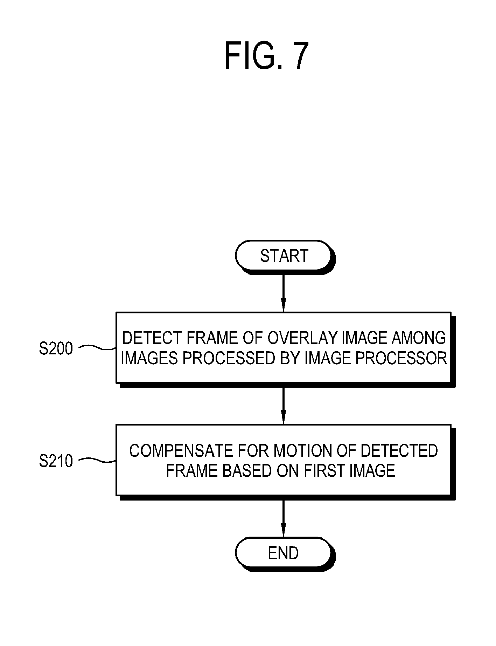

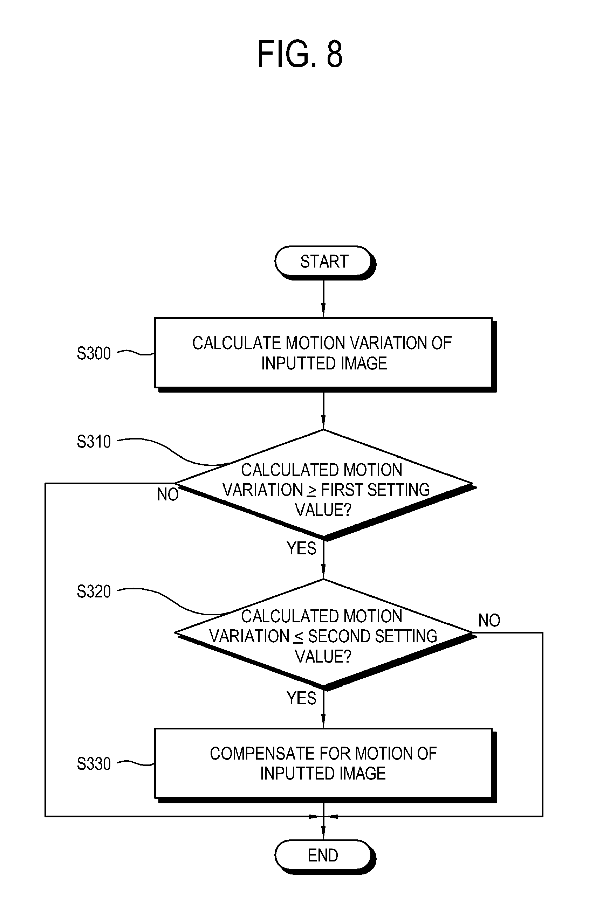

FIG. 6 is a control flowchart to outline the control method according to the present exemplary embodiment. FIG. 7 is a control flowchart to describe a motion compensation method in FIG. 6. FIG. 8 is a control flowchart of an overlay image determination in the control method in FIG. 7.

As shown in FIG. 6, the control method of the image processing apparatus 1 according to the present exemplary embodiment is as follows.

If a predetermined image is inputted from the image supply source 10 to the receiver 100, the image processors 200 and 300 process the inputted image to be displayed on the display unit 400 (S100). Here, the inputted image may include the first image or the overlay image where the first image is overlapped by the second image.

The motion compensator 500 determines whether the inputted image includes an overlay image (S110). If it is determined that the inputted image is the overlay image, the motion compensator 500 compensates for the motion of the overlay image processed by the image processors 200 and 300 on the basis of the first image (S120). The motion compensation method is the same as that of the motion compensator 500.

The image whose motion is compensated for by the motion compensator 500 is displayed on the display unit 400 (S120). Accordingly, a user may view the first image or overlay image whose motion is more natural and judder is minimized. If the first image being displayed is overlapped with the second image, the motion compensation for the first image may be performed.

In the process in FIG. 6, the motion compensator 500 compensates for the motion according to a following method.

As shown in FIG. 7, the motion compensator 500 detects the frame of the overlay image from the image processed by the image processors 200 and 300 if it is determined that the inputted image includes the overlay image of the first and second images (S200).

If the frame of the overlay image is detected from the frames of the image processed by the image processors 200 and 300, the motion compensator 500 compensates for the frame based on the first image (S21 0).

In the process in FIG. 7, the motion compensator 500 detects the frame of the overlay image according to a following method if the inputted image includes an overlay image.

As shown in FIG. 8, the motion compensator 500 calculates in real time the motion variation of the inputted image, i.e., a first image (S300). More specifically, the motion compensator 500 calculates the motion vector variation between consecutive frames of the first image.

The motion compensator 500 determines whether the calculated motion variation is the first setting value or more (S310). If the motion variation is the first setting value or more, the motion compensator 500 determines whether the motion variation is the second setting value and less (S320).

If the calculated motion variation is the first setting value or more, it means that the frame of the first image processed by the image processors 200 and 300 is overlapped with the second image (refer to FIG. 4) or the scene of the frame in the first image is entirely changed (refer to FIG. 5).

Thus, the cases that the calculated motion variation is the same as the second setting value and less can be divided into two cases as in FIGS. 4 and 5. That is, FIG. 4 illustrates the calculated motion variation which is in the range between the first setting value and the second setting value.

If it is determined that the calculated motion variation is equal to or larger than the first setting value and smaller than or equal to the second setting value, the motion compensator 500 compensates for the motion of the image processed by the image processor 200 and 300 (S330).

As the motion compensation is performed for the first image generated by a source having a different frame rate from that of the image processors 200 and 300, the first image may be displayed on the display unit 300 with more natural motion and judder may be minimized.

If the first image being displayed is overlapped with the second image, the motion compensator 500 may compensate for the motion of the overlay image. Here, if the second image is a still image such as an OSD menu, the motion compensator 500 compensates for the motion of the first image.

The motion compensator 500 according to the foregoing exemplary embodiment calculates and determines the motion variation of the image. To support the function, the motion compensator 500 may include a chip-set with firmware, but not limited thereto. Alternatively, the present invention may have various exemplary embodiments. For example, a controller (not shown) or a processor (not shown) may be provided to control the image processing apparatus 1 as a whole, and to perform the foregoing process.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A control method of an image processing apparatus, the control method comprising:
processing one among a first image, a second image formed on the basis of a different frame rate from that of the first image, and an overlay image where the first image is overlapped with the second image, which is inputted, to be displayable; and
compensating for a motion of the processed image on the basis of the first image if it is determined that the inputted image is the first image or the overlay image.

2. The control method according to claim 1, wherein the compensating for the motion comprises compensating for the motion if a motion variation of the overlay image processed to be displayed is a preset first setting value or more.

3. The control method according to claim 2, wherein the compensating for the motion comprises determining whether the motion variation between a frame of the first image and a frame of the overlay image adjacent to the frame of the first image is the first setting value or more.

4. The control method according to claim 2 or claim 3, wherein the motion variation of the overlay image is smaller than or equal to a second setting value larger than the first setting value.

5. The control method according to claim 2, wherein the compensating for the motion comprises calculating a motion vector variation between two frames adjacent to each other from the processed image to be displayed; and
generating and inserting an interpolation frame between the two frames adjacent to each other to have the variation smaller than the preset setting value if the variation is the preset setting value or more.

6. The control method according to claim 2, wherein the compensating for the motion comprises compensating for the motion if a motion variation of the overlay image processed to be displayed is a preset second setting valueor less.

7. The control method according to any preceding claim, wherein the first and second images are outputted by the same image supply source.

8. The control method according to claim 7, wherein the first image is formed by the image supply source based on a film image.

9. The control method according to claim 7 or claim 8, wherein the second image comprises an OSD (on screen display) menu.

10. An image processing apparatus, comprising:
an image processor (200/300) which processes one among a first image, a second image formed on the basis of a different frame from that of the first image, and an overlay image where the first image is overlapped with the second image, which is inputted, to be displayable; and
a motion compensator (500) which compensates for a motion of the image processed by the image processor (200/300) on the basis of the first image if it is determined that the inputted image is the first image or the overlay image.

11. The image processing apparatus according to claim 10, wherein the motion compensator (500) compensates for the motion if a motion variation of the overlay image processed by the image processor (200/300) is a preset first setting value and more.

12. The image processing apparatus according to claim 11, wherein the motion compensator (500) determines whether the motion variation between a frame of the first image and a frame of the overlay image adjacent to that of the first image is the first setting value and more.

13. The image processing apparatus according to claim 11, wherein the motion compensator (500) compensates for the motion of the overlay image if the motion variation of the overlay image is smaller than or equal to a second setting value larger than the first setting value and is equal to or larger than the first setting value.

14. The image processing apparatus according to any one of claims 10 to 13, wherein the motion compensator (500) calculates a motion vector variation of two frames adjacent to each other from the image processed by the image processor (200/300), and generates and inserts an interpolation frame between the two frames adjacent to each other to have the motion vector variation smaller than the preset setting value if the variation is the preset setting value or more.

15. The image processing apparatus according to any one of claims 10 to 14, wherein the first and second images are inputted by the same image supply source.
